(19) Europäisches Patentamt
European Patent Office
Office européen des brevets

(11) **EP 2 783 837 B1**

(12) **EUROPÄISCHE PATENTSCHRIFT**

(45) Veröffentlichungstag und Bekanntmachung des Hinweises auf die Patenterteilung:
**12.10.2016 Patentblatt 2016/41**

(51) Int Cl.:
*B29C 67/00* (2006.01)    *B41J 2/045* (2006.01)
*B41J 2/165* (2006.01)

(21) Anmeldenummer: **13161676.5**

(22) Anmeldetag: **28.03.2013**

(54) **Verfahren und Vorrichtung zum schichtweisen Aufbau eines Formkörpers**

Method and apparatus for the layered construction of a moulded part

Procédé et dispositif destinés au montage en couches d'un corps de formage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.10.2014 Patentblatt 2014/40**

(73) Patentinhaber: **Ivoclar Vivadent AG**
**9494 Schaan (LI)**

(72) Erfinder:
• **Laubersheimer, Jürgen**
**9470 Buchs (CH)**
• **Schmid, David**
**7204 Untervaz (CH)**

(74) Vertreter: **Uexküll & Stolberg**
**Partnerschaft von**
**Patent- und Rechtsanwälten mbB**
**Beselerstraße 4**
**22607 Hamburg (DE)**

(56) Entgegenhaltungen:
**EP-A1- 0 911 171      EP-A1- 0 988 977**
**EP-A1- 1 095 776      WO-A2-2011/135496**
**DE-A1-102009 055 966   US-A1- 2006 061 618**

**Beschreibung**

Die vorliegende Erfindung betrifft ein Verfahren zum schichtweisen Aufbau eines Formkörpers mittels eines 3D-Tintenstrahldruckverfahrens mit einem Piezo-Druckkopf, der einen Tintenzulauf und mehrere damit verbundene Düsen aufweist, denen jeweils ein Piezo-Element zugeordnet ist, das auf die zugehörige Düse einwirken kann, um Tinte daraus auszustoßen, wobei jedes Piezo-Element des Piezo-Druckkopfes von einer Steuereinheit individuell zum Ausstoß von Tinte ansteuerbar ist und ihr Ausstoß von der Steuereinheit überwacht wird, wobei bei dem Verfahren der Piezo-Druckkopf gesteuert von der Steuereinheit über ein Baugebiet verfahren wird, die Piezo-Elemente dabei von der Steuereinheit individuell zur ortselektiven Aufbringung von gefüllter Tinte angesteuert werden, um so eine Schicht mit von der Steuereinheit vorgegebener Kontur aufzubringen, die aufgebrachte Schicht aushärten gelassen wird und durch aufeinanderfolgende Aufbringung von Schichten mit jeweils vorgegebener Kontur der gewünschte Formkörper aufgebaut wird, wobei die Steuereinrichtung weiter dazu eingerichtet ist, nach einer vorgegebenen Anzahl von gedruckten Schichten und/oder falls die Steuereinheit bei einer Düse (6) des Piezo-Druckkopfs (2) einen verminderten Ausstoß von Tinte erfasst, den Piezo-Druckkopf aus dem Baugebiet für den Formkörper herauszufahren und anschließend die Düse oder die Düsen mit vermindertem Ausstoß oder alle Düsen des Piezo-Druckkopfes einer Düsenreinigung zu unterziehen.

Insbesondere zielt die Erfindung auf die Herstellung keramischer Formteile ab, die als Dentalrestaurationen dienen sollen. Seit einigen Jahren besteht die Möglichkeit, Zahnersatz "automatisiert" mit CAD/CAM-Systemen herzustellen. Nach einer digitalen Abdrucknahme (Scannen im Mund des Patienten oder an einem abgeformten Duplikatmodell) kann der Zahnersatz auf Basis der Scandaten mit einer Fräsmaschine aus Vollmaterial gefräst bzw. geschliffen werden. Diese abtragenden Herstellungsverfahren haben allerdings den Nachteil, dass der größte Teil der eingesetzten, wertvollen Keramikmaterialien verloren geht. Darüber hinaus sind die eingesetzten Maschinen bislang teuer und wartungsintensiv.

Neben den abtragenden Verfahren werden auch sogenannte "aufbauende Verfahren" eingesetzt, die auch unter den Begriff "rapid prototyping" oder "generative Fertigung" bekannt sind. Beispiele für Rapid-Prototyping-Verfahren sind die Stereolithographie und 3D-Tintenstrahldruckverfahren. Das Prinzip des Rapid-Prototyping beruht auf dem schichtweisen Aufbau eines dreidimensionalen Formteils. Dabei werden zweidimensionale Schichten mit jeweils vorgegebener Kontur aufeinander aufgebaut.

Unter den 3D-Tintenstrahldruckverfahren ist das Drucken polymerisierbarer Tinten nur eines von mehreren Verfahren. Daneben sind auch das Drucken eines Binders in ein Pulverbett oder das Drucken flüssiger Wachse bekannt. Bei den 3D-Tintenstrahldruckverfahren werden, demselben Prinzip wie die aus dem Büroalltag bekannten klassischen Tintenstrahldrucker folgend, direkt 3D-Objekte gedruckt, indem durch einen Piezo-Druckkopf, der mehrere Düsen aufweisen kann, polymerisierbare Modellmaterialien ("Tinten") in definierten Tropfen abgegeben werden, die Tinte aushärtet und so eine Schicht mit der gewünschten gedruckten Kontur gebildet wird.

Beim Tintenstrahldrucken können Piezo-Druckköpfe eingesetzt werden, die einen Tintenzulauf und eine Mehrzahl von mit dem Tintenzulauf verbundenen Düsen aufweisen, wobei jeder Düse ein Piezoelement zugeordnet ist. Die Piezoelemente der einzelnen Düsen sind von einer Steuereinheit separat ansteuerbar. Durch Beaufschlagung der Piezoelemente mit Steuersignalen werden die Piezoelemente gezielt verformt, um durch die Verformung einen diskreten Tropfen der Tinte durch die Düse mit definierter Tropfengröße auszustoßen. Größe und Volumen der Tropfen sowie die Tropfenabfolge aus der Düse lassen sich dabei durch die angelegten elektrischen Impulse steuern. Die Arbeitsfrequenz eines Piezoelements reicht aufgrund der Geometrie des Druckkopfes und der Rheologie der Tinten in der Regel bis etwa 20 kHz. Die Summe der Tropfen auf einem Substrat ergibt die gewünschte definierte zweidimensionale Struktur.

Die Düsen eines solchen Druckkopfes haben typischerweise eine sehr kleine Öffnung, die im Größenbereich von 10 bis 100 $\mu$m liegt, weshalb die ausgestoßenen Tropfen konsequenterweise sehr klein sind; ihr Durchmesser entspricht in erster Näherung der Öffnung der Düse, ihr Volumen liegt im Pikoliter-Bereich ($10^{-10}$ bis $10^{-12}$ Liter). Daher ist es möglich, in solchen Druckprozessen sehr feine Strukturen mit hoher Auflösung zu drucken. Im Fall des 3D'-Tintenstrahldrucks werden dazu üblicherweise dünnflüssige, polymerisierbare, meist photopolymerisierbare Substanzen als Tinten eingesetzt, die unmittelbar nach Auftreffen der Tropfen auf dem Substrat ausgehärtet werden. Typischerweise geschieht das, indem ein oder mehrere Druckköpfe über ein Substrat hinwegbewegt werden, die eine flächige Struktur bestehend aus einer Vielzahl aneinander gereihter Tropfen einer mit Photoinitiatoren versehenen polymerisierbaren Tinte drucken, und nachfolgend (oder parallel dazu) eine Belichtung mit einer Lichtquelle durchgeführt wird, die Licht mit einer geeigneten Wellenlänge emittiert, um das photopolymerisierbare Material der Tinte zu polymerisieren.

Tinten für solche 3D-Tintenschaltdruckverfahren enthalten in der Regel Füllstoffe. Füllstoffe können zum Beispiel Farbpigmente, Trübungsmittel etc. sein, die die optischen Eigenschaften der Tinte verändern. Durch Füllstoffe können aber auch die Fließeigenschaften der Tinte beeinflusst oder die Rheologie gesteuert werden. Im Fall des 3D-Tintenstrahldruckens zum Aufbau von keramischen Formkörpers sind Füllstoffpartikel notwendig.

Die Füllstoffpartikel sind in diesem Fall das eigentliche Baumaterial (z.B. Oxidkeramik). Die sie umgebende Flüssigkeit ist lediglich die Matrix, um diese Partikel mit der beschriebenen Technik zu einem Formkörper aufzubauen. Die Partikel beeinflussen dabei die Aspektverhältnisse (Dicken bzw. Schichthöhen) nicht direkt, jedoch die mechanischen, optischen, thermischen und elektrischen Eigenschaften des Formkörpers.

Möchte man 3D-Formkörper aus einem bestimmten Material, wie zum Beispiel Metall oder Keramik, erzeugen, so sind Füllstoffpartikel nicht nur Hilfsstoffe zum Einstellen bestimmter Dimensionen oder mechanischen Eigenschaften des Formkörpers, sondern essentieller Bestandteil der Tinte, und die flüssigen Bestandteile der Tinte fungieren als eine Art Trägersubstanz. Dabei sind in erster Näherung die Dimensionen und mechanischen Eigenschaften des dreidimensionalen Formkörpers umso besser erreichbar, je höher der Feststoffanteil in der Suspension ist, also je mehr Partikel als Füllstoffe in der Tinte enthalten sind. Typischerweise liegen die Teilchengrößen im Bereich von 0,1 bis 1 $\mu$m, die sich insbesondere zum Erreichen eines hohen Füllgrades eignen. Ein hoher Anteil an Feststoffpartikeln kann sich jedoch auf zweierlei Weise negativ auf die Tinte bzw. in der Folge auf den Tropfenausstoß/Druckprozess auswirken. Zum einen nimmt die Viskosität der Tinte mit zunehmendem Füllgrad zu und damit verschlechtern sich die Fließeigenschaften der Tinte. Zum anderen besteht die Gefahr, dass die feinen Düsen verstopft oder teilweise zugesetzt werden, wodurch der Tropfenausstoß verhindert oder behindert werden kann.

Keramikgefüllte Tinten, sogenannte "Schlicker", die sich zum Aufbau von Dentalrestaurationen eignen und die im Zusammenhang mit der vorliegenden Erfindung in 3D-Tintenstrahldruckverfahren verwendbar sind, sind in EP 2 233 449 A1 beschrieben. Diese Tinten können Keramikpartikel, Wachs und mindestens ein radikales polymerisierbares. Monomer enthalten. Zu weiteren Einzelheiten dieser Materialien wird auf die genannte veröffentlichte Patentanmeldung verwiesen.

US 2006/0061618 A1 beschreibt ein Verfahren mit den Merkmalen des Oberbegriffs von Anspruch 1 und eine Vorrichtung mit den Merkmalen des Oberbegriffs von Anspruch 6. Darin sind ein Verfahren und eine Vorrichtung zum 3D-Drucken beschrieben. Dabei ist eine separate Waschstation vorgesehen, in der Druckköpfe z.B. mithilfe von Wischern gereinigt werden können. Eine Steuereinheit überwacht zum Beispiel die Betriebszeit seit der letzten Reinigung oder kann nach anderen vorgegebenen Kriterien bestimmen, wann eine Reinigung erforderlich ist. Es wird auch vorgeschlagen, den Zustand des Druckkopfs zu überwachen, etwa mit einer auf die Düsen gerichteten Kamera. Wenn mittels automatischer Bildverarbeitung festgestellt wird, dass sich Rückstände an der Stirnfläche der Düse angesammelt haben, kann die Steuereinheit einen Waschvorgang auslösen. Dazu wird der Druckkopf dann zu der Waschstation gefahren und dort gereinigt.

Aus EP 0 988 977 A1 ist eine Reinigungsvorrichtung für Tintenstrahldruckköpfe bekannt. Diese Reinigungsvorrichtung weist einen Ultraschallwandler auf, der nahe an den zu reinigenden Druckköpfen positionierbar ist. Zum Reinigen werden Ultraschallwellen aus dem Ultraschallwandler auf die zu reinigenden Düse gerichtet, um eine Ultraschallreinigung der Düse durchzuführen. Nachteilig ist, dass neben den Druckköpfen eine weitere separate Reinigungsvorrichtung bereitgestellt und mit einem nur zu diesem Zweck der Reinigung vorgesehenen Ultraschallwandler ausgestattet sein muss.

Es ist Aufgabe der vorliegenden Erfindung, ein 3D-Tintenstrahldruckverfahren zum Aufbau von Formkörpern und ein dazu dienende Vorrichtung so zu verbessern, dass das Verfahren und die Vorrichtung auch bei Verwendung gefüllter Tinten sicher und störungsfrei anwendbar sind.

Zur Lösung dieser Aufgabe dient das Verfahren mit den Merkmalen des Patentanspruchs 1 und die Vorrichtung mit den Merkmalen des Patentanspruchs 6. Vorteilhafte Ausführungsformen der Erfindung sind in den Unteransprüchen angegeben.

Es ist vorgesehen, dass der Piezo-Druckkopf nach dem Drucken einer vorgebbaren Anzahl von Schichten oder falls eine Überwachung der Düsen des Piezo-Druckkopfes ergibt, dass eine oder mehrere Düsen einen gestörten Ausstoß zeigen, der Piezo-Druckkopf aus dem Baugebiet herausgefahren wird. Daraufhin werden alle Düsen oder die Düse oder die Düsen, bei denen ein gestörter Ausstoß festgestellt worden ist, einer Düsenreinigung unterzogen, wobei diese Reinigung erfindungsgemäß durchgeführt wird, indem zu jeder zu reinigenden Düse das zugehörige Piezo-Element mit einem Steuersignal mit einer Frequenz von wenigstens 20 kHz zur Erzeugung von Ultraschallwellen angesteuert wird, um durch die von dem Piezo-Element auf die Düse gerichteten Ultraschall Ablagerungen oder Verstopfungen darin zu zerkleinern und zu lösen.

Das Wirkungsprinzip einer solchen Reinigung basiert auf Kavitation. Unter Kavitation versteht man die Bildung und Auflösung von Dampfblasen in Flüssigkeiten durch Druckschwankungen. Das in der Flüssigkeit vorhandene Ultraschallfeld erzeugt Wellen mit Über- und Unterdruck. Trifft eine solche Unterdruckwelle auf einen zu reinigenden Gegenstand, bilden sich an kleinen, als Keime fungierenden Luftbläschen mit Dampf gefüllte Hohlräume. Beim Auftreffen der darauf folgenden Hochdruckwelle auf den Hohlraum steigt der statische Druck im Hohlraum durch dessen Kompression wieder über den Sättigungsdampfdruck. Dadurch kondensieren die Dampfblasen schlagartig mit Schallgeschwindigkeit. Dabei entstehen sehr hohe Druckspitzen. Diese zyklisch entstehenden und verschwindenden Hohlräume können Ablagerungen in der Düse zerkleinern und ablösen. Außerdem sind die Piezö-Elemente in unmittelbarer Nachbarschaft zu den zugehörigen Düsen angeordnet, so dass sie sehr effektiv Ultraschallenergie auf die Düsen richten können.

Durch die erfindungsgemäße Verfahrensweise kann ohne gerätetechnischen Mehraufwand, denn die zur Düsenreinigung eingesetzten Piezo-Elemente sind ja sowieso für den normalen Tintenstrahldruckvorgang nötig, sichergestellt werden, dass die Düsen regelmäßig oder sobald sich Anzeichen für Verstopfungen zeigen, nach Unterbrechung des Tintenstrahldruckvorgangs in der beschriebenen Weise gereinigt werden können, um sie von Ablagerungen zu befreien, wonach der Tintenstrahldruckvorgang zum Aufbau des Formkörpers fortgesetzt wird. Dadurch kann die einwandfreie Funktionsfähigkeit des Piezo-Druckkopfes im Verlaufe des Tintenstrahldruckvorgangs zum Aufbau des Formkörpers sichergestellt werden, ohne dass es zu unkontrollierten Ausfällen von Teilen des Piezo-Druckkopfes aufgrund von Verstopfungen kommen kann. Dadurch können längere Unterbrechungen durch Ausfall oder teilweise Funktionsstörung des Piezo-Druckkopfes verhindert werden. Ferner kann die Herstellung schadhafter Formkörper verhindert werden, die entstehen können, wenn zu lange mit einem durch verstopfte Düsen teilweise funktionsgestörten Piezo-Druckkopf gedruckt wird.

Zur Ausführung der Reinigungsfunktion können die Piezoelemente zur Erhöhung der übertragenen mechanischen Energie mit Spannungsimpulsen hoher Amplitude und mit steilen Impulsflanken (Anstiegs- und Absinkzeiten) betrieben werden. Vorzugsweise haben die periodischen Steuerimpulse mit einer Impulsfolgefrequenz von wenigstens 20kHz kurze Anstiegszeiten im Bereich von 1 bis 4 $\mu$s. Vorzugsweise liegen auch die Absinkzeiten im Bereich von 1 bis 4 $\mu$s. Die Amplitude der Steuerimpulse zu Ultraschallerzeugung sollte möglichst hoch sein, vorzugsweise wenigstens 80% der für die Piezoelemente maximal zulässigen Amplitude betragen.

Bei der erfindungsgemäßen Verfahrensweise wird der Tintenstrahldruckvorgang, in regelmäßigen Abständen oder wenn sich erste Anzeichen von Verstopfungen einer oder mehrerer Düsen zeigen, kurz unterbrochen, der Piezo-Druckkopf an einen von dem Baugebiet entfernten Ort verfahren und dort die Düsenreinigung betroffener Düsen durch Erzeugung von Ultraschallwellen durch die zugehörigen Piezo-Elemente durchgeführt, wonach der Piezo-Druckkopf wieder zurück in das Baugebiet verfahren und der nur kurz unterbrochene Druckvorgang fortgesetzt werden kann.

In einer bevorzugten Ausführungsform ist vorgesehen, dass bei der Düsenreinigung zusätzlich zu der Anwendung von Ultraschall alternierend hydrostatischer Über- und Unterdruck über die Düse oder die Düsen erzeugt wird, um gelöste Ablagerungen aus der oder den Düsen des Piezo-Druckkopfes vorzuspülen. Diese Druckanwendung kann zum Beispiel über eine Pumpe erfolgen, die Druckluft in eine Tintenkammer einführt, von der der Tintenzulauf des Piezo-Druckkopfes abgeht. Der eingestellte Druck in der Tintenkammer bestimmt daher auch den Druck der Tinte in den Düsen gegenüber dem Umgebungsdruck.

Die Erfindung wird im Folgenden anhand eines Ausführungsbeispiels in den Zeichnungen beschrieben, in denen:

Fig. 1 schematisch eine Frontansicht eines Piezo-Druckkopfes im Querschnitt zeigt,

Fig. 2 eine Seitenansicht des Piezo-Druckkopfes mit einer Detailvergrößerung zeigt,

Fig. 3 eine schematische seitliche Schnittansicht des Piezo-Druckkopfes mit einer zugehörigen Tintenkammer zeigt,

Fig. 4 eine seitliche Schnittansicht wie Fig. 3 bei Anlegen eines Unterdrucks in der Tintenkammer zeigt,

Fig. 5 eine seitliche Schnittansicht wie in Fig. 3 bei Anlegen eines Überdrucks in der Tintenkammer zeigt,

Fig. 6 eine seitliche Schnittansicht eines Ausschnitts des Piezo-Druckkopfes bei Erzeugen von Ultraschallwellen durch ein Piezo-Element zeigt,

Fig. 7 eine seitliche Schnittansicht eines Ausschnitts des Piezo-Druckkopfes zeigt, in der die Bildung von Ablagerungen in der Düse und stromaufwärts davon gezeigt ist,

Fig. 8 eine seitliche Schnittansicht wie Fig. 7 zeigt, wobei das Piezo-Element der dargestellten Düse Ultraschallwellen erzeugt, um die Ablagerungen zu lösen,

Fig. 9 eine seitliche Schnittansicht wie Fig. 7 und 8 zeigt, wobei die Reinigung durch Anlegen von Unterdruck stromaufwärts der Düse unterstützt wird,

Fig. 10 eine seitliche Schnittansicht wie in den Fig. 7 bis 9 zeigt, wobei die Reinigung durch Anlegen von Überdruck stromaufwärts der Düse unterstützt wird und die Ablagerungen dadurch mit der Tinte aus dem Druckkopf herausgespült werden,

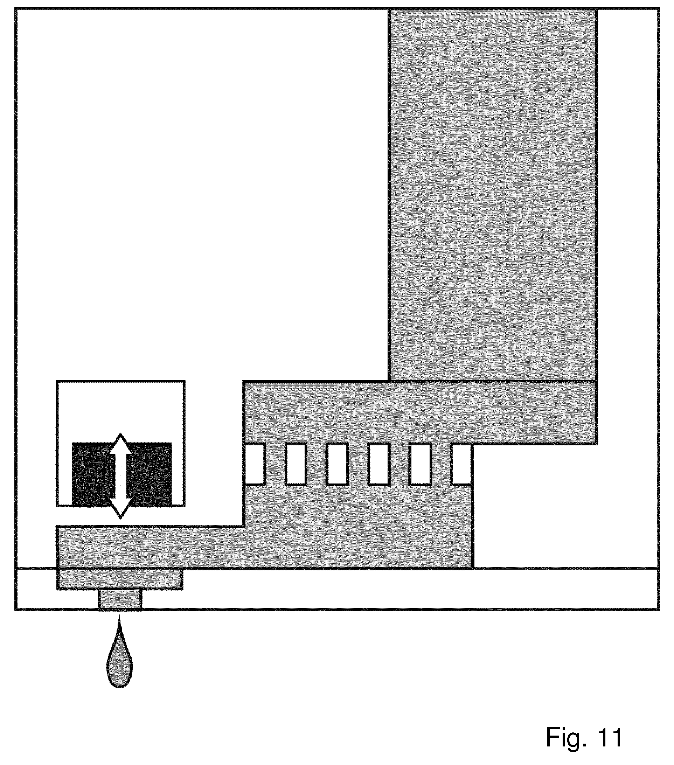

Fig. 11 eine seitliche Schnittansicht wie in den Fig. 7 bis 10 zeigt, wobei die Düse nach durchgeführter Reinigung wieder normal arbeitet, und

Fig. 12 die Impulsform eines die Piezoelemente beim Reinigungsvorgang ansteuernden Steuersignals zeigt.

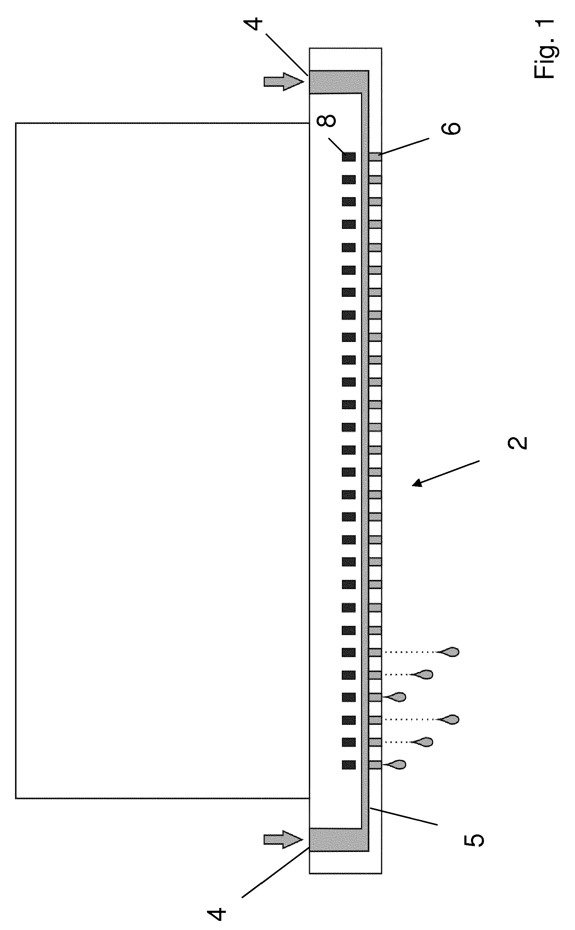

Fig. 1 zeigt schematisch einen Piezo-Druckkopf von vorne in einer Schnittansicht. Der Piezo-Druckkopf 2 hat Tintenzuläufe 4, die zu einer Sammelleitung 5 führen. Mit der Sammelleitung 5 sind eine Mehrzahl von Düsen 6 (von denen nur eine mit Bezugzeichen versehen ist) verbunden. Jeder Düse 6 ist ein Piezo-Element 8 zugeordnet, das mechanisch auf die Düse 6 einwirken kann, um Flüssigkeit aus der Düse 6 auszustoßen. Jedes Piezo-Element 8 ist von einer Steuereinheit individuell ansteuerbar und wird von der Steuereinheit mit Steuerimpulsen versorgt, um den Ausstoß von Tropfen für jede Düse 6 individuell gesteuert durchzuführen.

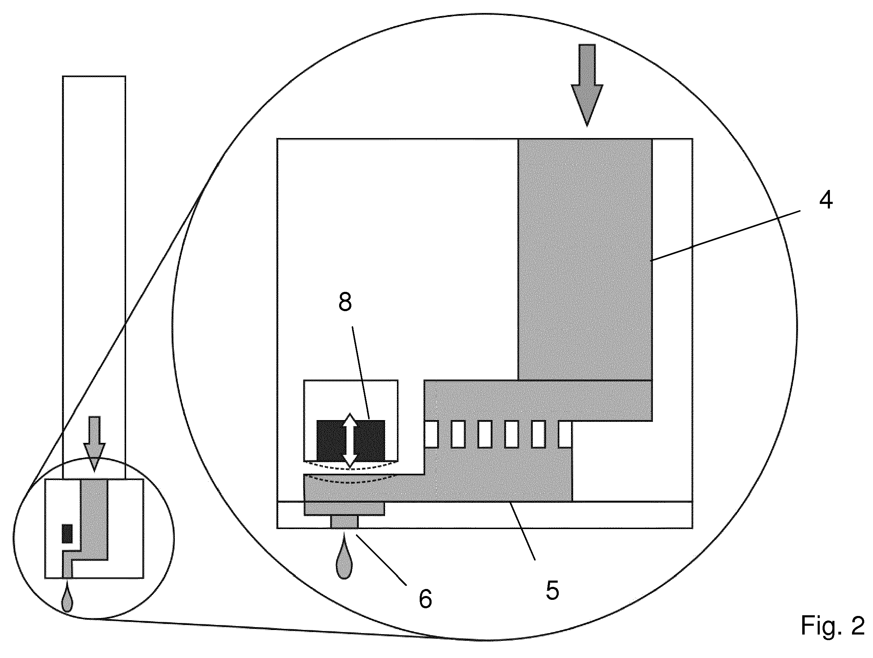

Fig. 2 zeigt einen schematischen Schnitt durch den Piezo-Druckkopf mit einer Detailvergrößerung im Bereich einer Düse 6. Durch die Steuereinheit wird jedes Piezoelement 8 mit Spannungsimpulsen gesteuert, die eine gesteuerte Ausdehnung/Kontraktion des Piezoelements 8 bewirken. Diese Ausdehnungsänderung wird mechanisch auf die Tinte im Bereich stromaufwärts der Düse 6 übertragen, um so durch einen gezielten Steuerimpuls auf das Piezoelement 8 den Ausstoß eines Tropfens Tinte aus der Düse 6 zu bewirken.

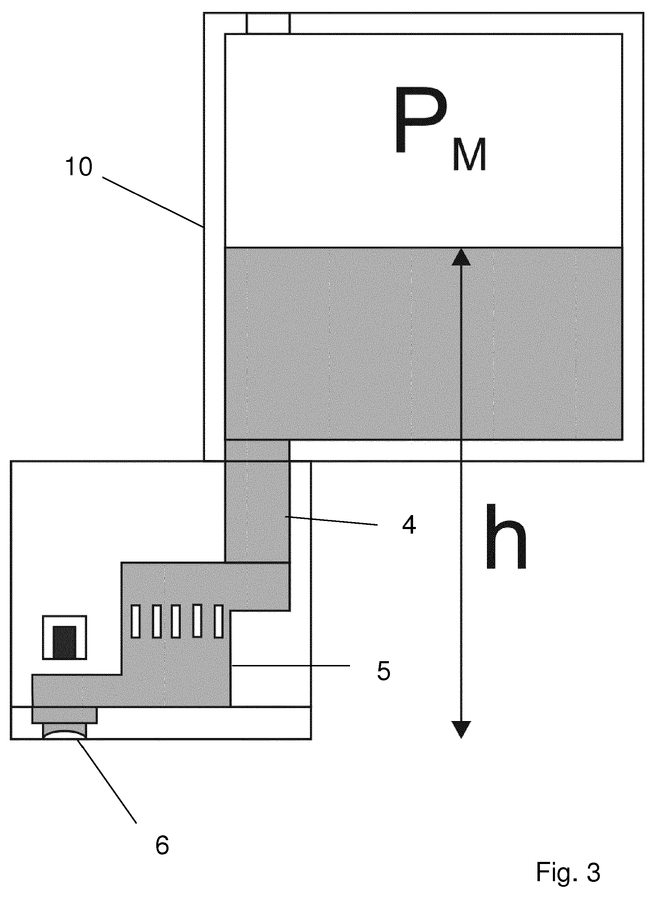

In Fig. 3 ist eine weitere Schnittansicht des Piezo-Druckkopfes gezeigt. Der Piezo-Druckkopf ist hier mit einer Tintenkammer 10 versehen, aus der Tinte in die Tintenzuläufe 4 zugeführt werden kann. In der Tintenkammer 10 wird ein Unterdruck $P_M$ erzeugt. Dieser Unterdruck ist zur Aufrechterhaltung des für die Tropfenerzeugung notwendigen Meniskus in der Düse notwendig, wobei die Flüssigkeitssäule im Reservoir zu berücksichtigen ist. Für diesen Unterdruck gilt die Beziehung:

$$P_M \approx -(P_{Kapillar} + \rho \bullet g \bullet h),$$

wobei $\rho$ die Dichte der Tinte, g die Erdbeschleunigung und h die Höhe des Flüssigkeitsspiegels in der Tintenkammer über dem Düsenausgang ist. $P_{kapillar}$ ist der notwendige Unterdruck um den Meniskus in der Kapillare (Düse) zu erzeugen und misst in der Regel 2.5 bis 10 mbar.

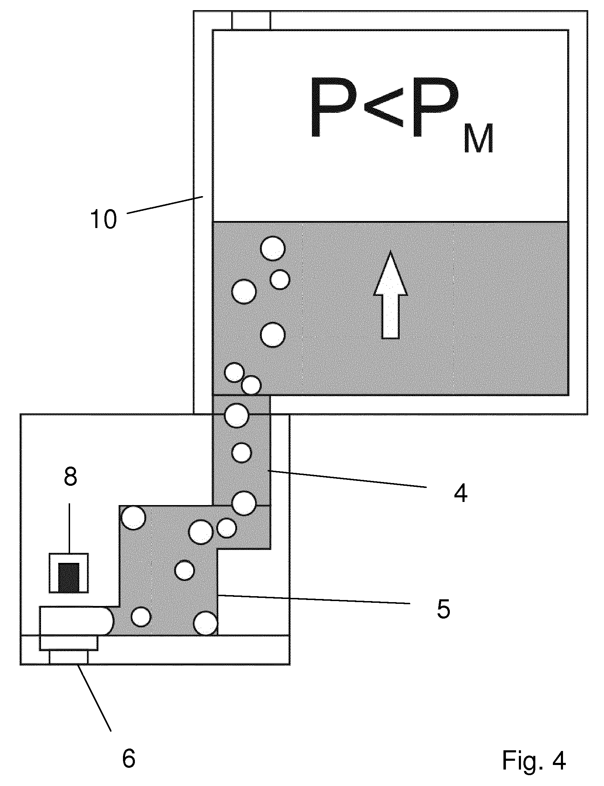

Fig. 4 zeigt eine entsprechende Schnittansicht wie Fig. 3, wobei der Druck in der Tintenkammer nun unter den Druck $P_M$ weiter erniedrigt ist. Durch Anlegen eines starken Unterdrucks wird Luft durch die Düsen angesogen. Dabei wird die Tinte aus der Düse zurückgezogen und wird die Tropfengenerierung verhindert.

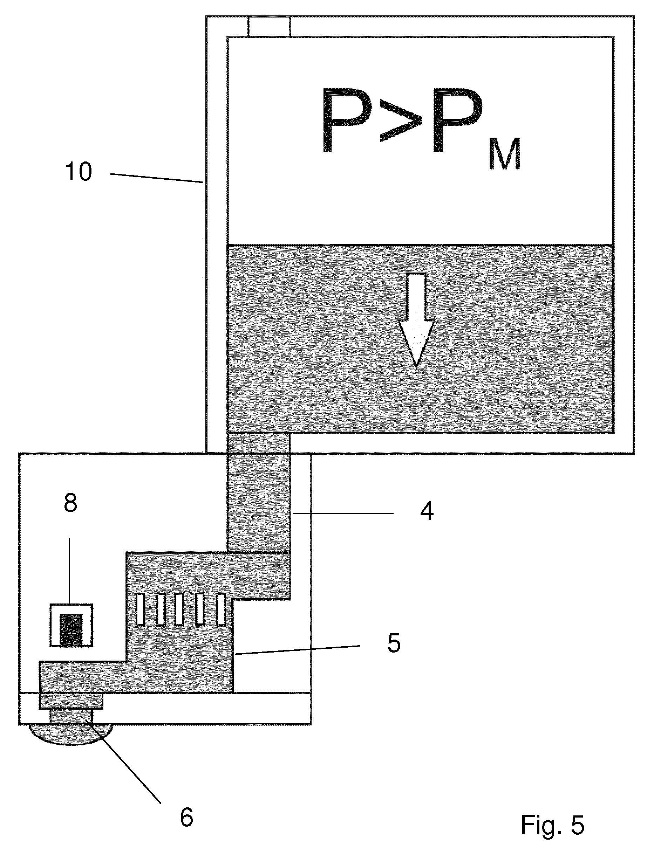

In Fig. 5 ist die Situation dargestellt, in der die Tintenkammer mit einem Überdruck über $P_M$ versorgt ist. Wenn der Überdruck hoch genug ist, wird die Tinte als Flüssigkeitsstrahl aus der Düse gedrückt.

Die Erzeugung von Über- oder Unterdruck in der Tintenkammer kann zum Beispiel durch eine steuerbare Pumpe oder eine andere steuerbare Luftdruckquelle erfolgen, die mit der Tintenkammer über eine Leitung verbunden ist und die von der Steuereinheit gesteuert wird.

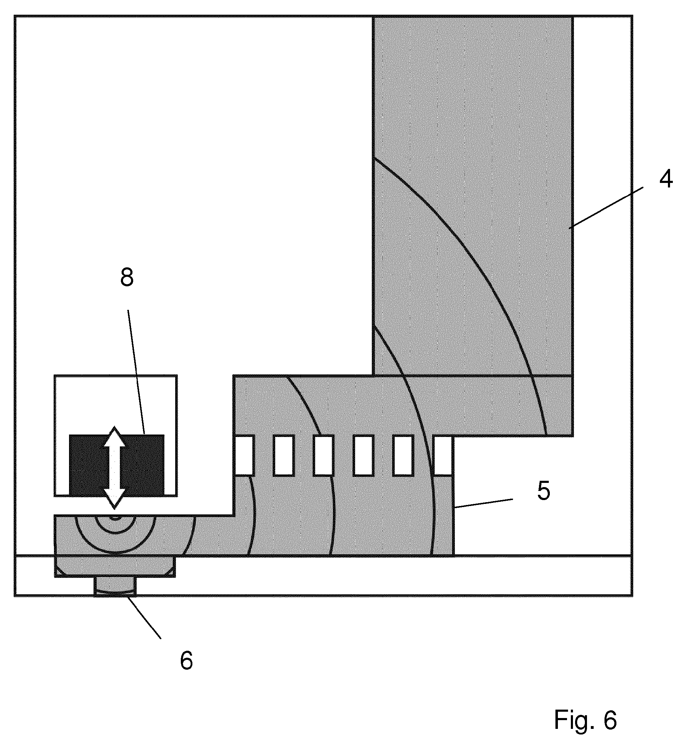

Fig. 6 zeigt einen Ausschnitt des Piezo-Druckkopfes im seitlichen Schnitt, wobei hier das Piezoelement 8 von der Steuereinheit zur Erzeugung von Ultraschallwellen mit einer Frequenz von wenigstens 20 kHz angeregt wird. Die sich in der Tintenflüssigkeit und auch in Richtung der Düse 6 ausdehnenden Ultraschallwellen sind schematisch dargestellt.

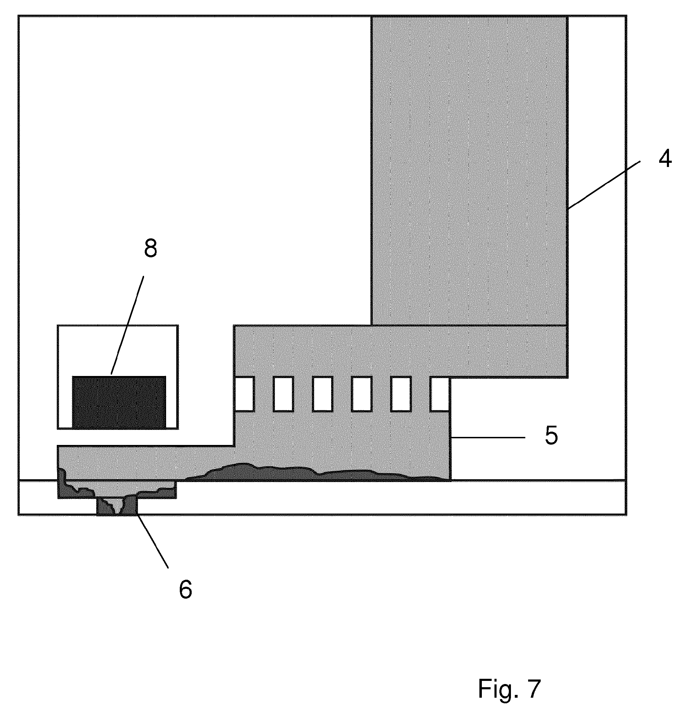

In Fig. 7 ist der Ausschnitt des Piezo-Druckkopfes wiederum im Schnitt gezeigt, wobei hier angedeutet ist, dass sich im Bodenbereich der Sammelleitung und im Bereich der Düse Ablagerungen gebildet haben. Aufgrund dieser Ablagerungen ist die Düse 6 teilweise verstopft und ihre Funktion daher gestört.

Es ist vorgesehen, dass die Düsen des Piezo-Druckkopfes in regelmäßigen Abständen gereinigt werden oder dann gereinigt werden, wenn festgestellt wird, dass eine Düse teilweise oder ganz verstopft ist. Die Steuereinrichtung des Piezo-Druckkopfes kann die Funktion der Düsen überwachen. Dies kann zum Beispiel durch Erfassung des Druckes in der Tintenflüssigkeit stromaufwärts der Düse 6 erfolgen. Eine andere Möglichkeit besteht darin, dass die Steuereinrichtung das Bild der ausgedruckten Tinte erfasst und auf Stellen hin untersucht, wodurch mangelnden Flüssigkeitsaustritt aus einer Düse ein unvollständiges Druckergebnis erreicht worden ist. Falls eine oder mehrere Düsen als gestört erfasst werden, wird der Piezo-Druckkopf aus dem Baugebiet des gerade aufzubauenden Formkörpers herausgefahren und alle seine Düsen oder nur die als in ihrer Funktion gestört erfassten einer Düsenreinigung unterzogen.

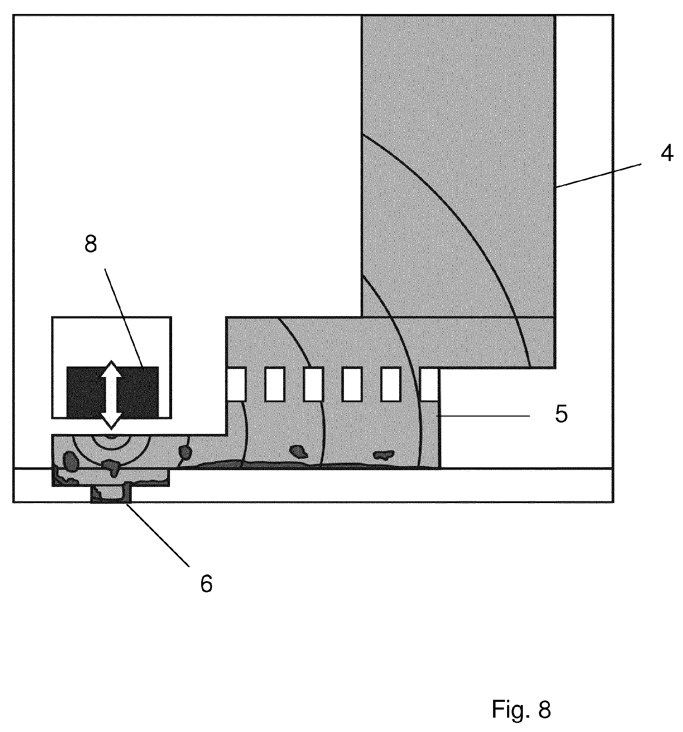

Der Ablauf der Düsenreinigung ist schematisch in der Folge der seitlichen Schnittdarstellungen in den Fig. 7 bis 10 dargestellt. In Fig. 7 ist die Situation eingetreten, dass eine Düse durch Ablagerungen teilweise verstopft ist. Zu Beginn der Düsenreinigung versetzt die Steuereinheit das Piezoelement 8 mit hochfrequenten Steuerimpulsen in Schwingungen, so dass das Piezoelement Ultraschallwellen mit Frequenzen von wenigstens 20 kHz ausstrahlt. Die Ultraschallwellen pflanzen sich in der Tintenflüssigkeit fort, wie in Fig. 8 dargestellt. Durch in der Tintenflüssigkeit erzeugte Kavitation erfolgt eine mechanische Einwirkung auf die Materialablagerungen, die dadurch zerkleinert und abgelöst werden.

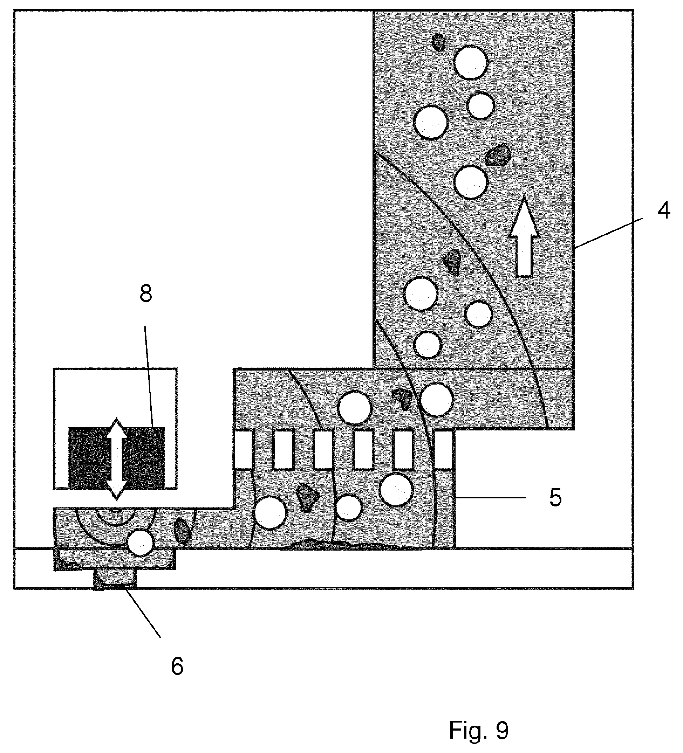

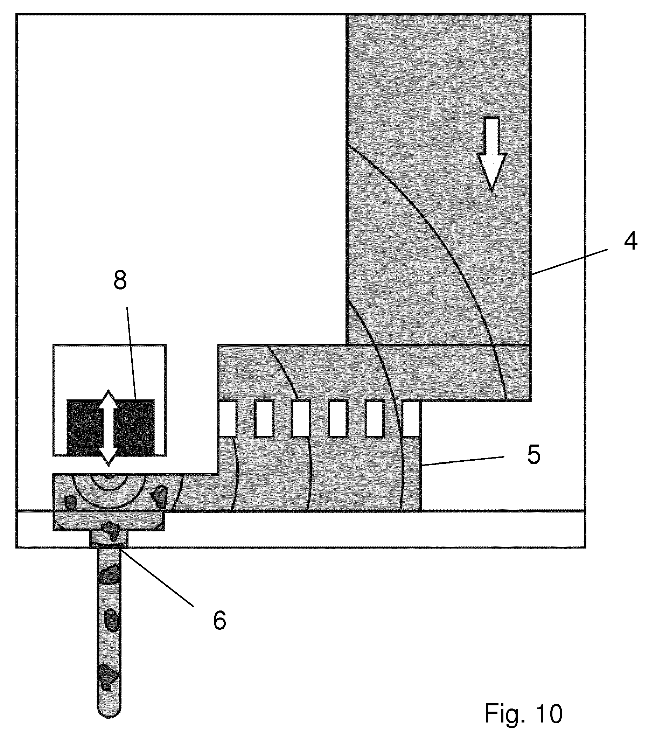

Die Düsenreinigung wird unterstützt durch eine alternierende Beaufschlagung der Tintenkammer mit Unter- und Überdruck, so dass eine pulsierende, hin- und hergehende Strömung durch die Düse erzeugt wird, durch die die gelösten Ablagerungen fortgespült werden sollen. Diese alternierende Versorgung der Tinte mit Unterdruck und Überdruck ist schematisch in den Fig. 9 und 10 dargestellt, in denen in Fig. 9 ein Unterdruck angelegt ist, der Tinte aus der Düse nach oben und Luftblasen durch die Düse in die Sammelleitung und den Tintenzulauf ansaugt. Durch die nachfolgende Versorgung der Tinte mit Überdruck in Fig. 10 wird Tinte durch die Düse 6 in einem Flüssigkeitsstrahl nach außen gedrückt, wodurch gelöste Teile der Ablagerungen fortgespült werden. Die pulsierende Versorgung der Tinte mit Unterdruck und Überdruck wie in den Fig. 9 und 10 dargestellt kann zum Beispiel mit einer Frequenz von 0,1 bis 1 Hz alternierend erfolgen.

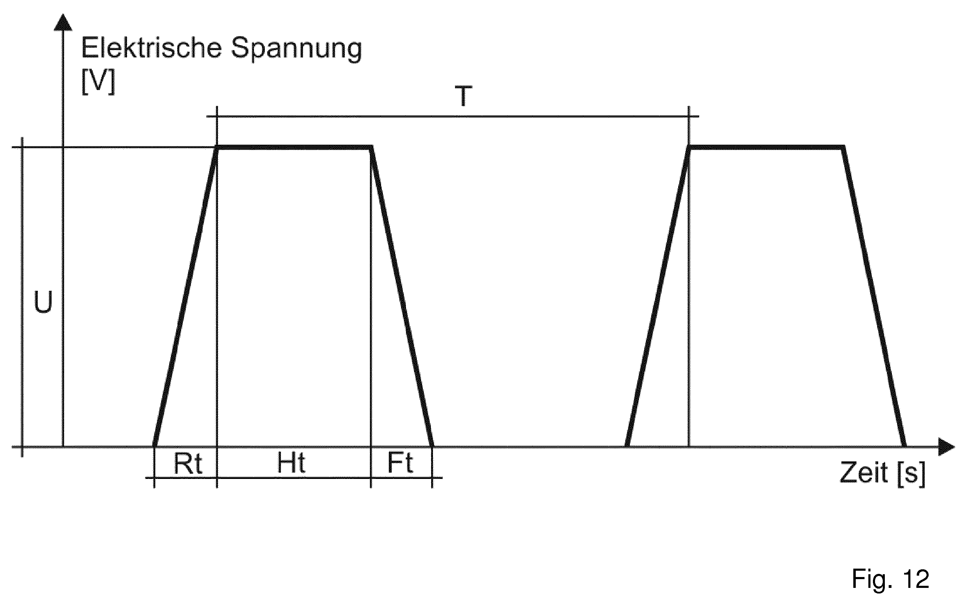

Zur Ausführung der Reinigungsfunktion können die Piezoelement zur Erhöhung der übertragenen mechanischen Energie mit Spannungsimpulsen hoher Amplitude und mit steilen Impulsflanken (kurze Anstiegs- und Absinkzeiten) betrieben werden. Die Pulsform kann dabei einer Trapezform entsprechen (siehe Fig. 12), wobei Rt der Anstiegszeit, Ht der Haltezeit und Ft der Absinkzeit des Pulses entsprechen. Je nach Druckkopf können die Anstiegs- und Absinkzeiten Werte im Bereich von 1 bis 4 $\mu$s annehmen, die Haltezeiten messen in der Regel 0 bis 15 $\mu$s. Die Amplitude U hängt vom vorliegenden Druckkopf und den entsprechenden Piezoelementen ab und sollte mindestens 80% der für den spezifischen Druckkopf maximalen elektrischen Spannung betragen. Je nach Druckkopf werden dafür Werte von 20 bis 200 V angelegt. T entspricht der Periodendauer und ist der Kehrwert der resultierenden Frequenz. Bei min. 20 kHz sollte die Periodendauer daher max. 50 $\mu$s betragen

**Patentansprüche**

1. Verfahren zum schichtweisen Aufbau eines Formkörpers mittels eines 3D-Tintenstrahldruckverfahrens mit einem Piezo-Druckkopf (2), der einen Tintenzulauf (4) und mehrere damit verbundene Düsen (6) aufweist, denen jeweils ein Piezo-Element (8) zugeordnet ist, das auf die zugehörige Düse einwirken kann, um Tinte daraus auszustoßen, wobei jedes Piezo-Element des Piezo-Druckkopfes von einer Steuereinheit individuell zum Ausstoß von Tinte ansteuerbar ist und ihr Ausstoß von der Steuereinheit überwacht wird, wobei bei dem Verfahren der Piezo-Druckkopf (2) gesteuert von der Steuereinheit über ein Baugebiet verfahren wird, die Piezo-Elemente dabei von der Steuereinheit individuell zur ortselektiven Aufbringung von gefüllter Tinte angesteuert werden, um so eine Schicht mit von der Steuereinheit vorgegebener Kontur aufzubringen, die aufgebrachte Schicht aushärten gelassen wird und durch aufeinanderfolgende Aufbringung von Schichten mit jeweils vorgegebener Kontur der gewünschte Formkörper aufgebaut wird, wobei die Steuereinheit dazu eingerichtet ist, nach einer vorgegeben Anzahl von gedruckten Schichten und/oder falls die Steuereinheit bei einer Düse (6) des Piezo-Druckkopfs (2) einen verminderten Ausstoß von Tinte erfasst, den Piezo-Druckkopf aus dem Baugebiet herauszufahren, anschließend die Düse oder Düsen mit vermindertem Ausstoß oder alle Düsen des Piezo-Druckkopfs einer Düsenreinigung zu unterziehen, **dadurch gekennzeichnet, dass** die Steuereinheit dazu eingerichtet ist, die Reinigung der Düsen durchzuführen, indem das oder die Piezo-Elemente (8) der zu reinigenden Düsen mit einer Frequenz von wenigstens 20 kHz zur Erzeugung von Ultraschallwellen angeregt werden, um eventuelle Ablagerungen in der Düse zu zerkleinern und zu lösen.

2. Verfahren nach Anspruch 1, **dadurch gekennzeichnet, dass** bei der Düsenreinigung zusätzlich zur Ultraschallanwendung alternierend hydrostatischer Über- und Unterdruck über die Düse oder Düsen erzeugt werden, um gelöste Ablagerungen aus der oder den Düsen des Piezo-Druckkopfes (2) fortzuspülen.

3. Verfahren nach Anspruch 1 oder 2, **dadurch gekennzeichnet, dass** zur Düsenreinigung die Piezoelemente (8) mit periodischen Steuerimpulsen mit kurzen Anstiegszeiten (Rt) im Bereich 1 bis 4 $\mu$s angesteuert werden.

4. Verfahren nach einem der vorhergehenden Ansprüche, **dadurch gekennzeichnet, dass** zur Düsenreinigung die Piezoelemente (8) mit periodischen Steuerimpulsen mit kurzen Absinkzeiten (Ft) im Bereich 1 bis 4 $\mu$s angesteuert werden.

5. Verfahren nach einem der vorhergehenden Ansprüche, **dadurch gekennzeichnet, dass** die Amplitude der Steuerimpulse zur Düsenreinigung wenigstens 80% der für die Piezoelemente (8) maximal zulässigen Amplitude beträgt.

6. Vorrichtung zum schichtweisen Aufbau eines Formkörpers mit einem 3D-Tintenstrahldruckverfahren mit einem Piezo-Druckkopf (2), der einen Tintenzulauf (4) und mehrere damit verbundene Düsen (6) aufweist, denen jeweils ein Piezo-Element (8) zugeordnet ist, das auf die zugehörige Düse (6) einwirken kann, um Tinte daraus auszustoßen, einer Steuereinheit, durch die die Piezo-Elemente (8) des Piezo-Druckkopfes (2) individuell zum Ausstoß von Tinte durch die zugehörige Düse ansteuerbar sind, und mit Einrichtungen zur Überwachung der Funktion der Düsen durch die Steuereinheit, wobei die Steuereinheit dazu eingerichtet ist, beim Aufbau eines Formkörpers den Piezo-Druckkopf über ein Baugebiet zu verfahren, die Piezo-Elemente individuell zur ortsselektiven Abgabe von gefüllter Tinte durch die zugehörigen Düsen anzusteuern, um so eine Schicht mit von der Steuereinheit vorgegebener Kontur aufzubringen, und durch aufeinanderfolgende Aufbringungen von Schichten mit jeweils vorgegebener Kontur den gewünschten Formkörper aufzubauen, wobei die Steuereinrichtung weiter dazu eingerichtet ist, nach einer vorgegebenen Anzahl von gedruckten Schichten und/oder falls die Steuereinheit bei einer Düse (6) des Piezo-Druckkopfs (2) einen verminderten Ausstoß von Tinte erfasst, den Piezo-Druckkopf aus dem Baugebiet für den Formkörper herauszufahren und anschließend die Düse oder die Düsen mit vermindertem Ausstoß oder alle Düsen des Piezo-Druckkopfes einer Düsenreinigung zu unterziehen, **dadurch gekennzeichnet, dass** die Steuereinheit dazu eingerichtet ist, die Reinigung der Düsen durchzuführen, indem das oder die Piezo-Elemente (8) der zu reinigenden Düsen (6) mit einer Frequenz von wenigstens 20 kHz zur Erzeugung von Ultraschallwellen angeregt wird, um eventuelle Ablagerungen in der Düse zu zerkleinern und zu lösen.

7. Vorrichtung nach Anspruch 6, **dadurch gekennzeichnet, dass** eine steuerbare Druckerzeugungseinrichtung vorhanden ist, die auf die Tinte in dem Tintenzulauf (4) und in den Düsen (6) einwirkt, und die Steuereinheit dazu eingerichtet ist, im Zusammenhang mit einer Düsenreinigung alternierend Unter- und Überdruck über die zu reinigenden Düsen anzulegen, so dass durch einen pulsierend hin- und hergehenden Tintenstrom durch die Düse oder die Düsen Ablagerungen fortgespült werden.

**Claims**

1. Process for the layered construction of a shaped body by means of a 3D inkjet printing process with a piezo printhead (2) which has an ink feed system (4) and several nozzles (6) connected thereto, to each of which a piezo element (8) is allocated which can act on the associated nozzle, in order to discharge ink from it, wherein each piezo element of the piezo printhead can be actuated individually by a control unit to discharge ink and its discharge is monitored by the control unit, wherein in the process the piezo printhead (2) is moved, controlled by the control unit, over a construction area, the piezo elements are actuated individually by the control unit for the locally selective application of filled ink, in order to thus apply a layer with a contour predetermined by the control unit, the applied layer is allowed to cure and the desired shaped body is constructed by successive application of layers, each with a predetermined contour, wherein the control unit is arranged to move the piezo printhead out of the construction area after a predetermined number of printed layers and/or if the control unit records a reduced discharge of ink in a nozzle (6) of the piezo printhead (2), then subject the nozzle or nozzles with reduced discharge or all the nozzles of the piezo printhead to a nozzle cleaning, **characterized in that** the control unit is arranged to perform the nozzle cleaning by stimulating the piezo element or elements (8) of the nozzles to be cleaned with a frequency of at least 20 kHz to generate ultrasound waves, in order to comminute and release any deposits in the nozzle.

2. Process according to claim 1, **characterized in that** during the nozzle cleaning, in addition to the application of ultrasound, alternating hydrostatic positive and negative pressure is generated via the nozzle or nozzles, in order to wash away released deposits out of the nozzle or nozzles of the piezo printhead (2).

3. Process according to claim 1 or 2, **characterized in that**, for the nozzle cleaning, the piezo elements (8) are actuated by periodic control pulses with short rise times (Rt) in the range of from 1 to 4 $\mu$s.

4. Process according to one of the previous claims, **characterized in that**, for the nozzle cleaning, the piezo elements (8) are actuated by periodic control pulses with short fall times (Ft) in the range of from 1 to 4 $\mu$s.

5. Process according to one of the previous claims, **characterized in that** the amplitude of the control pulses for the nozzle cleaning is at least 80% of the maximum allowable amplitude for the piezo elements (8).

6. Device for the layered construction of a shaped body with a 3D inkjet printing process with a piezo printhead (2) which has an ink feed system (4) and several nozzles (6) connected thereto, to each of which a piezo element (8) is allocated which can act on the associated nozzle (6), in order to discharge ink from it, a control unit by which the piezo elements (8) of the piezo printhead (2) can be actuated individually to discharge ink through the associated nozzle, and with devices for monitoring the functioning of the nozzles through the control unit, wherein the control unit is set up to move the piezo printhead over a construction area during the construction of a shaped body, control the piezo elements individually for the locally selective release of filled ink through the associated nozzles, in order to thus apply a layer with a contour predetermined by the control unit, and construct the desired shaped body by successive applications of layers, each with a predetermined contour, wherein the control unit is further arranged to move the piezo printhead out of the construction area for the shaped body after a predetermined number of printed layers and/or if the control unit records a reduced discharge of ink in a nozzle (6) of the piezo printhead (2) and then subject the nozzle or nozzles with reduced discharge or all the nozzles of the piezo printhead to a nozzle cleaning, **characterized in that** the control unit is arranged to perform the nozzle cleaning by applying a frequency of at least 20 kHz to the piezo element or elements (8) of the nozzles (6) to be cleaned to generate ultrasound waves, in order to comminute and release any deposits in the nozzle.

7. Device according to claim 6, **characterized in that** there is a controllable pressure-generating device which acts on the ink in the ink feed system (4) and in the nozzles (6), and the control unit is set up, in connection with a nozzle cleaning, to apply negative and positive pressure, alternating, via the nozzles to be cleaned, with the result that deposits are washed away by a pulsating, oscillating ink flow through the nozzle or nozzles.

**Revendications**

1. Procédé pour former couche par couche un corps façonné au moyen d'un procédé d'impression en relief à jet d'encre qui recourt à une tête piézo d'impression (2) qui présente une amenée d'encre (4) à laquelle sont reliées plusieurs tuyères (6) à chacune desquelles est associé un élément piézo (8) qui peut agir sur la tuyère associée pour en expulser de l'encre,

chaque piézo-élément de la tête piézo d'impression pouvant être commandé séparément par une unité de commande pour expulser de l'encre dont l'expulsion est surveillée par l'unité de commande, la tête piézo d'impression (2) étant déplacée au dessus d'un domaine de formation sous la commande de l'unité de commande,

les piézo-éléments étant commandés séparément par l'unité de commande pour amener de l'encre sélectivement en chaque emplacement pour ainsi appliquer une couche dont le contour est prédéterminé par l'unité de commande,

la couche appliquée étant amenée à durcir et l'application de couches successives de contour prédéterminé formant le corps façonné souhaité,

l'unité de commande étant conçue pour sortir la tête piézo d'impression du domaine de formation après un nombre prédéterminé de couches imprimées et/ou au cas où l'unité de commande constate que la quantité d'encre expulsée par une tuyère (6) de la tête piézo d'impression (2) est diminuée, pour faire subir ensuite un nettoyage à la tuyère ou aux tuyères dont l'expulsion est réduite ou à toutes les tuyères de la tête piézo d'impression,

**caractérisé en ce que**

l'unité de commande est conçue pour réaliser le nettoyage des tuyères en excitant le ou les piézo-éléments (8) des tuyères à nettoyer à une fréquence d'au moins 20 kHz pour former des ondes ultrasoniques permettant de déchiqueter et détacher les dépôts éventuellement formés sur les tuyères.

2. Procédé selon la revendication 1, **caractérisé en ce que** lors du nettoyage des tuyères, une surpression et une dépression hydrostatique sont formées en alternance sur la ou les tuyères en plus de l'application d'ultrasons pour balayer les dépôts détachés de la ou des tuyères de la tête piézo d'impression (2).

3. Procédé selon les revendications 1 ou 2, **caractérisé en ce que** pour le nettoyage des tuyères, les piézo-éléments (8) sont commandés par des impulsions périodiques de commande à court temps de montée (Rt), de l'ordre de 1 à 4 μs.

4. Procédé selon l'une des revendications précédentes, **caractérisé en ce que** pour le nettoyage des tuyères, les piézo-éléments (8) sont commandés à des impulsions périodiques de commande à courte durée de descente (Ft), de l'ordre de 1 à 4 μs.

5. Procédé selon l'une des revendications précédentes, **caractérisé en ce que** l'amplitude des impulsions de commande du nettoyage des tuyères correspond au moins à 80 % de l'amplitude maximale admissible pour les piézo-éléments (8).

6. Dispositif pour former couche par couche un corps façonné au moyen d'un procédé d'impression en relief à jet d'encre qui recourt à une tête piézo d'impression (2) qui présente une amenée d'encre (4) à laquelle sont reliées plusieurs tuyères (6) à chacune desquelles est associé un élément piézo (8) qui peut agir sur la tuyère (6) associée pour en expulser de l'encre, le dispositif présentant

une unité de commande qui permet de commander séparément chaque piézo-élément (8) de la tête piézo d'impression (2) pour expulser de l'encre et des dispositifs de surveillance du fonctionnement des tuyères par l'unité de commande,

l'unité de commande étant conçue pour déplacer la tête piézo d'impression au-dessus d'un domaine de formation,

les piézo-éléments étant commandés séparément par l'unité de commande pour amener de l'encre sélectivement en chaque emplacement pour ainsi appliquer une couche dont le contour est prédéterminé par l'unité de commande,

la couche appliquée étant amenée à durcir et l'application de couches successives de contour prédéterminé formant le corps façonné souhaité,

le dispositif de commande étant en outre conçu pour sortir la tête piézo d'impression du domaine de formation après un nombre prédéterminé de couches imprimées et/ou au cas où l'unité de commande constate que la quantité d'encre expulsée par une tuyère (6) de la tête piézo d'impression (2) est diminuée, pour faire subir ensuite un nettoyage à la tuyère ou aux tuyères dont l'expulsion est réduite ou à toutes les tuyères de la tête piézo d'impression,

**caractérisé en ce que**

l'unité de commande est conçue pour réaliser le nettoyage des tuyères en excitant le ou les piézo-éléments (8) des tuyères (6) à nettoyer à une fréquence d'au moins 20 kHz pour former des ondes ultrasoniques permettant de déchiqueter et détacher les dépôts éventuellement formés sur les tuyères.

7. Dispositif selon la revendication 6, **caractérisé en ce qu'**il présente un dispositif d'établissement de pression qui agit sur l'encre présente dans l'amenée d'encre (4) et dans les tuyères (6) et **en ce qu'**en association avec un nettoyage des tuyères, l'unité de commande est conçue pour appliquer en alternance une dépression et une surpression sur les tuyères à nettoyer de telle sorte que les dépôts puissent être balayés hors de la tuyère ou des tuyères par un écoulement pulsé d'encre en va-et-vient.

EP 2 783 837 B1

Fig. 1

Fig. 2

$P_M$

10

4

h

5

6

Fig. 3

$$P<P_M$$

10

8

4

5

6

Fig. 4

$$P > P_M$$

10

8

4

5

6

Fig. 5

Fig. 6

Fig. 7

Fig. 8

Fig. 9

Fig. 10

Fig. 11

Fig. 12

EP 2 783 837 B1

**IN DER BESCHREIBUNG AUFGEFÜHRTE DOKUMENTE**

**In der Beschreibung aufgeführte Patentdokumente**

- EP 2233449 A1
- US 20060061618 A1

- EP 0988977 A1